# EUROPÄISCHE PATENTSCHRIFT

(11) **EP 3 838 079 B1**
(45) Veröffentlichungstag und Bekanntmachung des Hinweises auf die Patenterteilung: **19.04.2023**
(21) Anmeldenummer: 20208259.0
(22) Anmeldetag: 18.11.2020
(51) Int. Cl.: A47J 31/44

(54) **GETRÄNKEBEREITER MIT BELEUCHTUNGSEINRICHTUNG**
BEVERAGE PREPARER WITH LIGHTING DEVICE
PRÉPARATEUR DE BOISSONS POURVU DE DISPOSITIF D'ÉCLAIRAGE

(30) Priorität: 17.12.2019 DE 102019134625
(43) Veröffentlichungstag der Anmeldung: 23.06.2021
(73) Patentinhaber: Miele & Cie. KG, 33332 Gütersloh (DE)
(72) Erfinder: Wüstefeld, Michael, 59555 Lippstadt (DE)

(56) Entgegenhaltungen:
- EP-A1- 1 762 163
- EP-A1- 2 898 804
- DE-A1-102016 107 086
- DE-A1-102017 001 173
- US-A1- 2017 086 477

## Beschreibung

Die Erfindung betrifft einen Getränkebereiter, umfassend
- einen Korpus;
- ein Fluidsystem im Korpus angeordnetes Fluidsystem;
- eine Steuereinrichtung zur Steuerung des Fluidsystems zur Zubereitung eines Getränks und einen Getränkebehälterabstellabschnitt;
- eine am oder im Korpus eingefügte, von außen zugängliche Nische mit zumindest einer Begrenzungswand;
- eine Auslassvorrichtung zur Ausgabe des zubereiteten Getränks, welche in der Nische angeordnet ist;
eine Beleuchtungseinrichtung zum Ausleuchten der Nische im Bereich der Auslassvorrichtung.

Aus der EP 1 762 163 A1 ist ein Getränkebereiter mit einer Ausgabenische und einer Beleuchtungsvorrichtung bekannt. Die Beleuchtungseinrichtung umfasst Leuchtmittel, die im Inneren des Gehäuses oberhalb der Ausgabenische angebracht sind und einen nach unten gerichteten Lichtstrahl generieren. Dieser wird durch Wandöffnungen im oberen Bereich der Nische zum darunterliegenden Ausgabebereich geleitet.

Eine andere Ausführungsform des Standes der Technik wird in der DE 102 10 161 B4 beschrieben, wobei bei dieser Ausführungsform die Beleuchtungseinrichtung eine in dem Innern des Korpus angeordnete Lichtquelle umfasst, die mit einem Lichtleiter zusammenwirkt, der das ausgestrahlte Licht in den Ausgabebereich leitet.

Der Erfindung liegt somit die Aufgabe zugrunde, einen Getränkebereiter mit einer verbesserten Beleuchtung bereitzustellen.

Erfindungsgemäß wird unter anderem diese Aufgabe durch einen Getränkebereiter mit den Merkmalen des unabhängigen Anspruchs 1 gelöst. Vorteilhafte Ausgestaltungen und Weiterbildungen der Erfindung ergeben sich aus den nachfolgenden abhängigen Ansprüchen.

Die mit der Erfindung erreichbaren Vorteile bestehen darin, dass eine übersichtliche Handhabung im gesamten Ausgabebereich bzw. in der gesamten Nische bereitgestellt wird. Dazu wird die Nische zumindest nahezu vollumfänglich und nahezu geleichmäßig ausgeleuchtet, wobei verwirrende Schattenbildung nicht oder kaum störend auftritt.

Hierzu umfasst die Beleuchtungseinrichtung des Getränkebereiters folgende Merkmale:
- zumindest einen flächigen, in der Nische angebrachten Leuchtkörper zur Abgabe des Lichts in die Nische;
- eine Lichtquelle, die Licht in den Leuchtkörper einstrahlen kann.

Bevorzugt umfasst die Lichtquelle eine oder mehrere LEDs, sodass bei kleinem Bauraum und geringem Energiebedarf eine ausreichend helle Lichtquelle bereitgestellt werden kann.

Erfindungsgemäß umfasst die Nische eine Rückwand, zwei gegenüberliegende Seitenwände, wobei der Leuchtkörper an zumindest einer Seitenwand undloder Rückwand () angeordnet ist. Aufgrund des großflächigen Lichtaustritts in die Nische bzw. zum Ausgabebereich wird das Verdecken des austretenden Lichts vermieden, wobei auch große Behältnisse den Lichtaustritt nicht vollständig verstellen können. Dadurch kann der Benutzer auch in einem dunklen Raum die Nische stets vollständig sehen, sodass eine sichere Handhabung mit seinem Trinkgefäß gegeben ist. Ein bereits aufgestelltes Gefäß oder ein neben dem Auslauf abgestelltes Gefäß wird auch bei dunkler Umgebung sicher erkannt. In einer weiteren, insgesamt vorteilhaften Ausführung umfasst der Leuchtkörper eine translucente transparente Scheibe, welche als flächiger Wandabschnitt ausgebildet ist, wobei Lichtquelle an einer Seite des Leuchtkörpers angeordnet ist, um das Licht in den Leuchtkörper einzukoppeln, wobei der Leuchtkörper Mittel zur Umlenkung und Streuung der Lichtstrahlen umfasst. Die Streuungsmittel sind so platziert, dass das eingekoppelte Licht aus der zur Nische weisenden Fläche austritt, wobei ein nahezu gleichmäßiges Leuchten dieser Fläche gegeben ist.

In einer insgesamt zweckmäßigen Ausführung umfasst der Getränkebereiter eine frontseitige, bewegbare Tür, wobei die Nische in der bewegbaren Tür angeordnet, die Scheibe in der Seitenwand der Nische, wobei die Lichtquelle im feststehenden Korpus angebracht ist, wodurch sie bei geschlossener Tür das Licht in den Leuchtkörper einkoppeln kann. Hinter der Tür befindet sich im Korpus der Wartungsbereich mit den Versorgungsbehältern sowie und Abfall,- und Abwasserbehältern. In der genannten Ausführung sind die Lichtquellen im feststehenden Korpus angebracht, sodass keine beweglichen Kabel zur elektrischen V Versorgung der Lichtquellen notwendig sind. Alle Komponenten in der beweglichen Tür sind passiv, wodurch sich ein insgesamt einfacher Aufbau ergibt.

In einer vorteilhaften Weiterbildung ist die Streuscheibe auch am feststehenden Korpus angebracht, wie die Lichtquellen. Der Leuchtkörper dient dabei als Lichtleiter zum Durchleiten der Lichtstrahlen von der Streuscheibe ausgehend in die Nische. Dies ist vorteilhaft, wenn im Korpus der Platz zur Aufnahme der Streuscheibe vorhanden ist. Ferner kann die Streuscheibe mit den Lichtquellen als Integrales, einteiliges Modul ausgebildet werden, wodurch ein dampfdichter undloder wasserdichter und dauerhaft haltbarer Aufbau erreicht wird. Der Leuchtkörper ist dabei als transparente Wand oder transparenter Wandabschnitt der Nische ausgebildet.

Bei der Anordnung des Leuchtkörpers in einer der Seitenwände oder in beiden Seitenwänden erstreckt sich dieser im Bereich von 70 % bis 100 % der Fläche der jeweiligen Seitenwand in der Nische.

Bei der Anordnung des Leuchtkörpers in der Rückwand erstreckt sich dieser im Bereich von 50 % bis 80 % der Fläche der jeweiligen Seitenwand in der Nische.

Insgesamt ist es vorteilhaft, dass beide gegenüberliegende Seitenwände mit jeweils einem Leuchtkörper mit jeweils entsprechend zugeordneter Lichtquelle versehen bzw. ausgestattet sind. Dadurch wird eine Schattenbildung innerhalb der Nische weitestgehend vermieden.

In einer insgesamt weiteren, vorteilhaften Ausführung ist die Steuereinrichtung dazu eingerichtet, die Lichtquelle entsprechend vorgegebener Szenarien hinsichtlich der Intensität undloder Farben zu steuern bzw. aktivieren. Beispielsweise kann eine individuelle Farbe einem Betriebszustand zugeordnet werden. Beispielsweise kann ein in Bereitschaft stehendes Gerät mit einer dezenten oder gedimmten Beleuchtung versehen sein, wobei beim Aktivieren des Gerätes die Beleuchtung heller aktiviert wird. Wenn das Getränk fertig zubereitet ist, kann dies durch ein Blinken oder einen mehrfach wechselnden, plötzlichen Farbwechsel signalisiert werden.

Insgesamt ist es zweckmäßig, dass die Auslaufvorrichtung im oder am Getränkebereiter innerhalb der Nische relativ zu dem Korpus und zu dem Getränkebehälterabstellabschnitt bewegbar ausgeführt ist.

Ein Ausführungsbeispiel der Erfindung ist in den Zeichnungen rein schematisch dargestellt und wird nachfolgend näher beschrieben. Es zeigen
- Fig. 1:: einen Getränkebereiter in einer teilweise schematischen Frontansicht und
- Fig. 2, 3: den Getränkebereiter mit geöffneter Tür in verschiedenen Ausführungen.

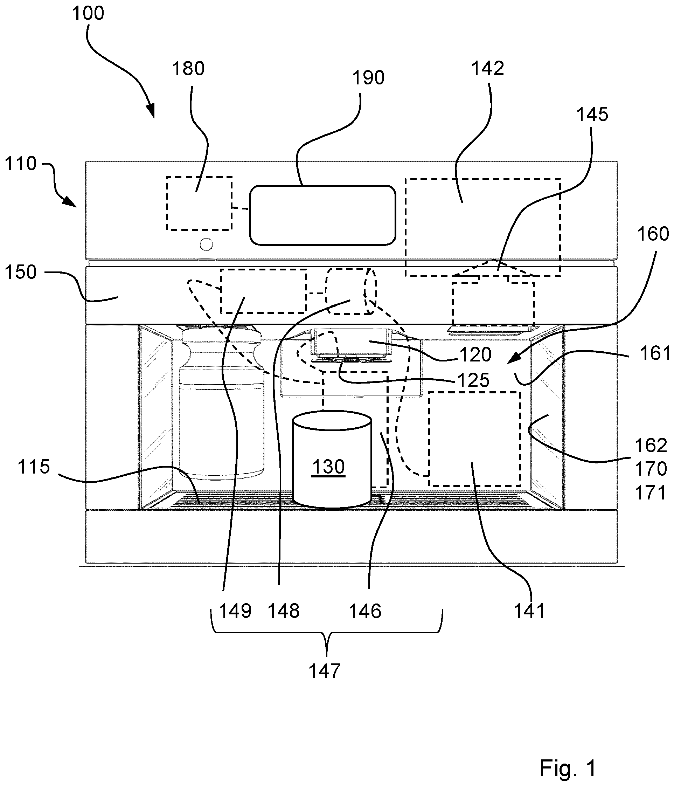

Fig. 1 zeigt eine perspektivische Darstellung einer Heißgetränkemaschine 100 gemäß einem Ausführungsbeispiel. Dabei ist die Heißgetränkemaschine 100 als ein Kaffeevollautomat, in dem dargestellten Beispiel als ein Einbau-Kaffeevollautomat ausgeführt. Die Heißgetränkemaschine 100 weist einen Korpus 110 auf, innerhalb des Korpus sind die Komponenten zum Zubereiten des Heißgetränks untergebracht. Diese sind, schematisch skizziert, die Vorratsbehälter 141 für Wasser und für Kaffeebohnen 142, ein Mahlwerk 145, die Brüheinheit 146 und das Strömungsleitungssystem147 mit Pumpe 148, Durchlauferhitzer 149 und Sensoren zur Messung von Wassertemperatur undloder Durchflussmenge. Die Heißgetränkemaschine 100 besitzt ferner eine Bedienvorrichtung 190 zur Eingabe der Benutzerwünsche, die mit einer Steuereinrichtung 180 in Verbindung steht zum Steuern der Komponenten zum Zubereiten des gewünschten Heißgetränks und einen Getränkebehälterabstellabschnitt oder eine Abstellfläche 115 auf. Dabei ist der Getränkebehälterabstellabschnitt 115 als eingeformte oder anders hergestellte Nische 160 in der frontseitigen Tür 150 zum Verschließen des Inneren des Korpus 110 bereitgestellt. Der Getränkebehälterabstellabschnitt 115 ist zum Abstellen von Getränkebehältern 130, beispielsweise Kaffeetassen, ausgebildet.

Ferner weist die Heißgetränkemaschine 100 eine Auslaufvorrichtung 120 mit Auslaufdüsen 125 auf. Die Auslaufvorrichtung 120 ist in einer bevorzugten Ausführung relativ zu dem Korpus 110 bzw. relativ zu dem Getränkebehälterabstellabschnitt 115 bewegbar ausgeführt. Dabei ist die Auslaufvorrichtung 120 in einer in Figur 1 dargestellten Betriebsposition der Heißgetränkemaschine 100 oberhalb des Getränkebehälterabstellabschnittes 115 angeordnet. Die Auslaufvorrichtung 120 ist zu dem Getränkebehälterabstellabschnitt 115 hin und von dem Getränkebehälterabstellabschnitt 115 weg verfahrbar, beispielsweise manuell betätigt oder durch eine Antriebseinrichtung in dem Korpus 110. Die Auslaufvorrichtung 120 ist insgesamt dazu ausgebildet, zumindest einen Getränkebehälter 130 zu Befüllen.

Der Abstellabschnitt 115 befindet sich in der Nische 160, die durch zwei gegenüberliegende Seitenwände 162 und der dem Korpus 110 zugewandten Rückwand 161 begrenzt ist. In dem dargestellten Beispiel sind beide Seitenwände 161 mit einem Leuchtkörper 171 der Beleuchtungseinrichtung 170 versehen, wobei der Leuchtkörper 171 in dem dargestellten Beispiel die gesamte Fläche der Seitenwand 162 einnimmt. Die gegenüberliegende Seitenwand 161 ist ebenfalls mit einem flächigen Leuchtkörper 171 zum Austreten lassen des Lichts versehen. Die Nische 160 befindet sich in der Tür 150, sodass die begrenzenden Wände 161, 162 und die Abstellfläche 115 mit bewegt werden, wenn die Tür 150 aufgeschwenkt wird.

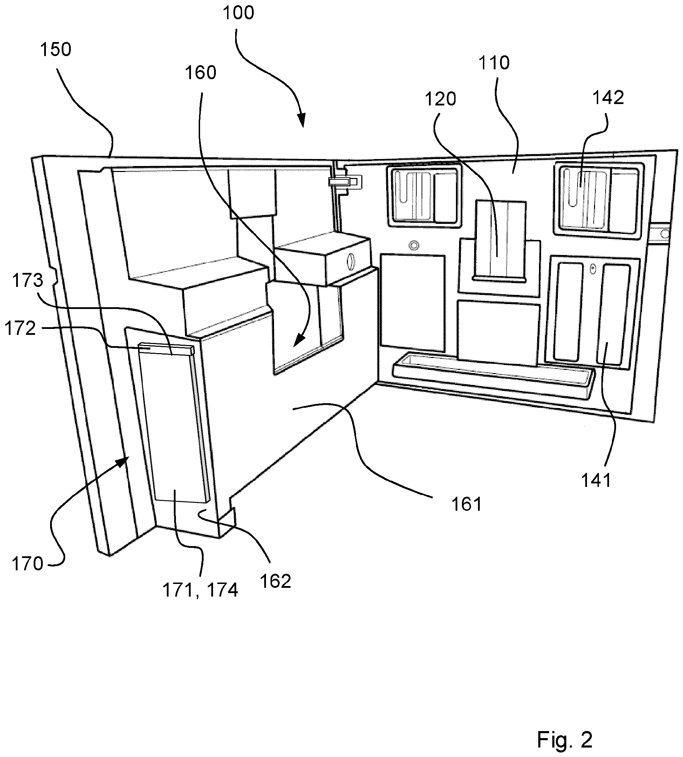

Fig. 2 zeigt eine perspektivische Darstellung einer Heißgetränkemaschine 100 gemäß einem Ausführungsbeispiel mit aufgeschwenkter Tür 150. Zu erkennen ist der von vorn zugängliche Wartungsbereich im Korpus 110. Hier sind die Vorratsbehälter für Wasser 141 und für die Bohnen 142 zum Befüllen zugänglich. Die Auslaufvorrichtung 120 ist am Korpus 110 höhenverstellbar geführt. In dem gezeigten Beispiel, das dem der Fig. 1 entsprechen kann, ist an der Seitenwand 162 der Nische 160 die Beleuchtungseinrichtung 170 angebracht. Diese umfasst eine Lichtquelle 172, die an einer Kante 173 des Leuchtkörpers 171 angeordnet ist und dort hineinstrahlen kann. Der Leuchtkörper 171 ist hierbei mit einer Streuscheibe 174 versehen bzw. als solche ausgebildet. Die Streuscheibe 174 ist derart ausgebildet, dass sie die von der oberen Kante 173 eintreffenden Lichtstrahlen zur Nische 160 hin umlenkt und verteilt, sodass auf der Seite der Nische 160 eine große Fläche der Seitenwand 162 oder die gesamte Seitenwand 162 leuchtet.

Entsprechend kann die Beleuchtungseinrichtung 170 für die Rückwand 161 der Nische 160 konfiguriert werden.

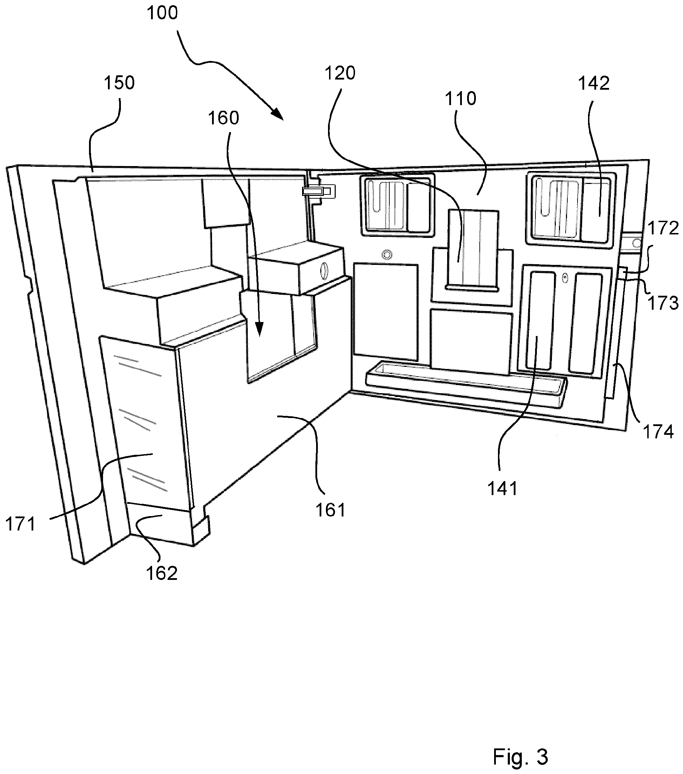

Fig. 3 zeigt eine perspektivische Darstellung einer Heißgetränkemaschine 100 gemäß einem weiteren Ausführungsbeispiel mit aufgeschwenkter Tür 150. Zu erkennen ist der von vorn zugängliche Wartungsbereich im Korpus 110. Hier sind die Vorratsbehälter für Wasser 141 und für die Bohnen 142 zum Befüllen zugänglich. Die Auslaufvorrichtung 120 ist am Korpus 110 höhenverstellbar geführt. In dem gezeigten Beispiel, das dem der Fig. 1 entsprechen kann, ist an der Seitenwand 162 der Nische 160 die Beleuchtungseinrichtung der Leuchtkörper 171 für die Beleuchtungseinrichtung 170 angebracht. Diese umfasst eine Lichtquelle 172, die an einer Kante 173 des Streuscheibe 174 angeordnet ist und dort hineinstrahlen kann. Die Streuscheibe 174 ist hierbei als Block ausgebildet. Die Streuscheibe 174 ist derart ausgebildet, dass sie die von der oberen Kante 173 eintreffenden Lichtstrahlen zur Nische 160 hin umlenkt und verteilt, wenn dir Tür 150 geschlossen ist. Dadurch kann auf der Seite der Nische 160 eine große Fläche der Seitenwand 162 oder die gesamte Seitenwand 162 leuchtet, nur dann, wenn die Tür 150 geschlossen ist. In dem Beispiel sind die Lichtquelle 172 und die Streuscheibe 174 am Korpus 110 angebracht, wobei der Leuchtkörper 171 an der türseitigen Seitenwand 162 der Nische 160 angeordnet ist. Diese ist als transparenter Abschnitt der Seitenwand 162 ausgebildet, sodass die aus der Streuscheibe 174 austretenden Lichtstrahlen durch den Leuchtkörper 171 hindurch zur Nische 160 geleitet werden. In einer vorteilhaften Weiterbildung kann die Streuscheibe 174 so konfiguriert sein, dass die aus der Fläche austretenden Lichtstrahlen in Richtung der Frontseite des Korpus 110 geleitet werden, sodass bei geöffneter Tür 150 der Wartungsbereich im Inneren des Korpus 110 und bevorzugt die Behälter 141, 142 beleuchtet werden. Der Leuchtkörper 171 ist hierbei so ausgebildet, dass schräg nach hinten eintreffende Lichtstrahlen wieder zur Seite in Richtung Nische 160 umgelenkt werden. Bei geschlossener Tür 150 werden dadurch die Seitenwände 162 zum Leuchten gebracht bzw. die Lichtstrahlen in die Nische 160 geleitet.

Entsprechend kann die Beleuchtungseinrichtung 170 für die Rückwand 161 der Nische 160 konfiguriert werden.

Die Richtungs- und Positionsangaben für alle Ausführungen beziehen sich auf die betriebsgemäße Position der Getränkemaschine 100.

## Patentansprüche

1. Getränkebereiter (100), umfassend
- einen Korpus (110);
- ein Fluidsystem im Korpus angeordnetes Fluidsystem (147);
- eine Steuereinrichtung (180) zur Steuerung des Fluidsystems (147) zur Zubereitung eines Getränks und einen Getränkebehälterabstellabschnitt (115);
- eine am oder im Korpus (110) eingefügte, von außen zugängliche Nische (160) mit zumindest einer Begrenzungswand (161, 162), wobei die Nische (160) eine Rückwand (161), zwei gegenüberliegende Seitenwände (162) umfasst;
- eine Auslassvorrichtung (120) zur Ausgabe des zubereiteten Getränks, welche in der Nische (160) angeordnet ist;
eine Beleuchtungseinrichtung (170) zum Ausleuchten der Nische (160),
wobei, die Beleuchtungseinrichtung (170) folgende Merkmale umfasst
- einen flächigen, in der Nische (160) angebrachten Leuchtkörper (171) zur Abgabe des Lichts in die Nische (160);
- eine Lichtquelle (172), die Licht in den Leuchtkörper (171) einstrahlen kann, **dadurch gekennzeichnet, dass** der Leuchtkörper (171) an zumindest einer Seitenwand (162) undloder Rückwand (161) angeordnet ist, wobei der Leuchtkörper (171) sich im Bereich von 70 % bis 100 % der Fläche der jeweiligen Seitenwand (162) in der Nische (160) undloder in einem Bereich von 50 % bis 80 % der Fläche der Rückwand (161) in der Nische (160) erstreckt .

2. Getränkebereiter (100) nach Anspruch 1, wobei die Lichtquelle (172) eine oder mehrere LEDs umfasst.

3. Getränkebereiter (100) nach einem der Ansprüche 1 bis 2, wobei der Leuchtkörper (171) eine translucente transparente Scheibe umfasst, welche als flächiger Wandabschnitt ausgebildet ist, wobei Lichtquelle (172) an einer Seite (173) des Leuchtkörpers (171) angeordnet ist, um das Licht in den Leuchtkörper (171) einzukoppeln, wobei der Leuchtkörper (171) Mittel (174) zur Umlenkung undloder Streuung der Lichtstrahlen umfasst.

4. Getränkebereiter (100) nach einem der Ansprüche 1 bis 3, umfassend eine frontseitige, bewegbare Tür (150), wobei die Nische (160) in der bewegbaren Tür (150) und der Leuchtkörper (171) in der Seitenwand (162) der Nische (160) angeordnet ist, wobei die Lichtquelle (172) im feststehenden Korpus (110) angebracht ist, wodurch sie bei geschlossener Tür (150) das Licht in den Leuchtkörper (171) einkoppeln kann.

5. Getränkebereiter (100) nach Anspruch 4, wobei die Streuscheibe (173) am feststehenden Korpus (110) angebracht ist, und wobei der Leuchtkörper (171) als Lichtleiter zum Durchleiten der Lichtstrahlen vom Korpus (110) in die Nische (160) dient.

6. Getränkebereiter (100) nach einem der Ansprüche 1 bis 5, wobei beide gegenüberliegenden Seitenwände (162) mit jeweils einem Leuchtkörper (171) mit jeweils entsprechend zugeordneter Lichtquelle (172) versehen bzw. ausgestattet sind.

7. Getränkebereiter (100) nach einem der Ansprüche 1 bis 6, wobei die Steuereinrichtung (180) dazu eingerichtet ist, die Lichtquelle (172) entsprechend vorgegebener Szenarien hinsichtlich der Intensität undloder Farben zu steuern bzw. aktivieren.

8. Getränkebereiter (100) nach einem der Ansprüche 1 bis 7, wobei die Auslaufvorrichtung (120) innerhalb der Nische (160) relativ zu dem Korpus (110) und zu dem Getränkebehälterabstellabschnitt (115) bewegbar ausgeführt ist.

9. Getränkebereiter nach einem der Ansprüche 1 bis 8, wobei der Getränkebereiter als Einbaugerät zum Einbau in einem Schrank oder einer Möbelnische ausgebildet ist.

## Claims

1. Beverage preparation means (100), comprising:
- a body (110);
- a fluid system fluid system (147) arranged in the body;
- a control device (180) for controlling the fluid system (147) for preparing a beverage, and a beverage container placement portion (115);
- an externally accessible recessed region (160) which is inserted on or in the body (110) and has at least one delimiting wall (161, 162), the recessed region (160) comprising a rear wall (161), two opposite sidewalls (162);
- an outlet device (120), arranged in the recessed region (160), for dispensing the prepared beverage;
an illumination means (170) for illuminating the recessed region (160), the illumination means (170) comprising the following features:
- a planar lamp element (171) mounted in the recessed region (160) for emitting the light into the recessed region (160);
- a light source (172) which can irradiate the light into the lamp element (171), **characterised in that** the lamp element (171) is arranged on at least one side wall (162) and/or rear wall (161), the lamp element (171) extending in the range of 70% to 100% of the area of the relevant side wall (162) in the recessed region (160) and/or in a range of 50% to 80% of the surface of the rear wall (161) in the recessed region (160).

2. Beverage preparation means (100) according to claim 1, wherein the light source (172) comprises one or more LEDs.

3. Beverage preparation means (100) according to either of claims 1 to 2, wherein the lamp element (171) comprises a translucent transparent panel which is designed as a planar wall portion, wherein the light source (172) is arranged on one side (173) of the lamp element (171) in order to couple the light into the lamp element (171), wherein the lamp element (171) comprises means (174) for deflecting and/or scattering the light beams.

4. Beverage preparation means (100) according to any of claims 1 to 3, comprising a movable door (150) on the front side, wherein the recessed region (160) is arranged in the movable door (150) and the lamp element (171) is arranged in the side wall (162) of the recessed region (160), wherein the light source (172) is mounted in the stationary body (110), as a result of which it can couple the light into the lamp element (171) when the door (150) is closed.

5. Beverage preparation means (100) according to claim 4, wherein the scattering panel (173) is mounted on the stationary body (110), and wherein the lamp element (171) acts as a waveguide for directing the light beams through from the body (110) into the recessed region (160).

6. Beverage preparation means (100) according to any of claims 1 to 5, wherein both opposite side walls (162) are each provided with or are equipped with a lamp element (171) each having a correspondingly associated light source (172).

7. Beverage preparation means (100) according to any of claims 1 to 6, wherein the control device (180) is designed to control or activate the light source (172) according to predetermined scenarios with respect to the intensity and/or colours.

8. Beverage preparation means (100) according to any of claims 1 to 7, wherein the outlet device (120) is movable within the recessed region (160) relative to the body (110) and to the beverage container placement portion (115).

9. Beverage preparation means according to any of claims 1 to 8, wherein the beverage preparation means is designed as a built-in appliance to be installed in a cupboard or a recessed region in an item of furniture.

## Revendications

1. Préparateur de boissons (100), comprenant
- un corps (110) ;
- un système de fluide (147) disposé dans le corps système de fluide ;
- un dispositif de commande (180) pour la commande du système de fluide (147) pour la préparation d'une boisson et une section de support de récipient pour boisson (115) ;
- une niche (160) accessible depuis l'extérieur, insérée sur ou dans le corps (110) et comportant au moins une paroi de délimitation (161, 162), la niche (160) comprenant une paroi arrière (161), deux parois latérales (162) opposées ;
- un dispositif de sortie (120) pour la distribution de la boisson préparée, lequel est disposé dans la niche (160) ;
un dispositif d'éclairage (170) permettant d'éclairer la niche (160), le dispositif d'éclairage (170) comprenant les caractéristiques suivantes :
- un corps lumineux (171) plat et placé dans la niche (160) pour l'émission de lumière dans la niche (160) ;
- une source de lumière (172), laquelle peut émettre de la lumière dans le corps lumineux (171), **caractérisé en ce que** le corps lumineux (171) est disposé sur au moins une paroi latérale (162) et/ou une paroi arrière (161), le corps lumineux (171) s'étendant dans la niche (160) dans une plage de 70 % à 100 % de la surface de la paroi latérale (162) respective et/ou s'étendant dans la niche (160) dans une plage de 50 % à 80 % de la surface de la paroi arrière (161).

2. Préparateur de boissons (100) selon la revendication 1, dans lequel la source de lumière (172) comprend une ou plusieurs DEL.

3. Préparateur de boissons (100) selon l'une des revendications 1 à 2, dans lequel le corps lumineux (171) comprend un disque transparent translucide, lequel est réalisé en tant que section de paroi plane, la source de lumière (172) étant disposée sur un côté (173) du corps lumineux (171) pour coupler la lumière dans le corps lumineux (171), le corps lumineux (171) comprenant des moyens (174) permettant de dévier et/ou de diffuser les rayons lumineux.

4. Préparateur de boissons (100) selon l'une des revendications 1 à 3, comprenant une porte mobile (150) côté avant, la niche (160) étant disposée dans la porte mobile (150) et le corps lumineux (171) étant disposé dans la paroi latérale (162) de la niche (160), la source de lumière (172) étant montée dans le corps (110) fixe, moyennant quoi elle peut coupler la lumière dans le corps lumineux (171) lorsque la porte (150) est fermée.

5. Préparateur de boissons (100) selon la revendication 4, dans lequel le disque diffuseur (173) est monté sur le corps (110) fixe et dans lequel le corps lumineux (171) sert de guide de lumière permettant de faire passer les rayons lumineux depuis le corps (110) dans la niche (160).

6. Préparateur de boissons (100) selon l'une des revendications 1 à 5, dans lequel les deux parois latérales (162) opposées sont pourvues ou équipées de respectivement un corps lumineux (171) comportant une source de lumière (172) respectivement associée correspondante.

7. Préparateur de boissons (100) selon l'une des revendications 1 à 6, dans lequel le dispositif de commande (180) est configuré pour commander ou activer la source de lumière (172) en fonction de scénarios prédéterminés en ce qui concerne l'intensité et/ou les couleurs.

8. Préparateur de boissons (100) selon l'une des revendications 1 à 7, dans lequel le dispositif de sortie (120) est conçu de manière à pouvoir être déplacé à l'intérieur de la niche (160) par rapport au corps (110) et à la section de support de récipient pour boisson (115).

9. Préparateur de boissons selon l'une des revendications 1 à 8, dans lequel le préparateur de boissons est réalisé en tant qu'appareil encastrable destiné à être encastré dans une armoire ou une niche de meuble.
